Europäisches Patentamt

European Patent Office

Office européen des brevets

(19)

(11) Veröffentlichungsnummer: **0 207 390**
**B1**

(12) EUROPÄISCHE PATENTSCHRIFT

(45) Veröffentlichungstag der Patentschrift:
13.09.89

(51) Int. Cl.⁴: **C08G 65/46, C02F 9/00**

(21) Anmeldenummer: 86108397.0

(22) Anmeldetag: 19.06.86

(54) Verfahren zur Rückgewinnung der Amin- und Metallkomponenten bei der Polyphenylenethersynthese.

(30) Priorität: 22.06.85 DE 3522470

(43) Veröffentlichungstag der Anmeldung:
07.01.87 Patentblatt 87/2

(45) Bekanntmachung des Hinweises auf die Patenterteilung:
13.09.89 Patentblatt 89/37

(84) Benannte Vertragsstaaten:
BE DE FR GB IT NL

(56) Entgegenhaltungen:
US-A- 3 733 301
US-A- 4 071 500

Die Akte enthält technische Angaben, die nach dem Eingang der Anmeldung eingereicht wurden und die nicht in dieser Patentschrift enthalten sind.

(73) Patentinhaber: BASF Aktiengesellschaft,
Carl-Bosch-Strasse 38, D-6700 Ludwigshafen(DE)

(72) Erfinder: Mitulla, Konrad, Dr., Schwalbenweg 31,
D-6700 Ludwigshafen(DE)
Erfinder: Hambrecht, Juergen, Dr., Am Klosterwald 31,
D-4400 Muenster-Hiltrup(DE)
Erfinder: Marquardt, Siegfried, Georg-Blundo-Strasse 9,
D-6712 Bobenheim-Roxheim(DE)
Erfinder: Brandt, Hermann, Dr., Keltenstrasse 30,
D-6707 Schifferstadt(DE)
Erfinder: Schmitt, Burghard, Dr., Braeunigstrasse 12,
D-6520 Worms 24(DE)
Erfinder: Gausepohl, Hermann, Dr., Neuweg 10,
D-6704 Mutterstadt(DE)
Erfinder: Siebel, Peter, Dr., Trifelsring 20,
D-6703 Limburgerhof(DE)
Erfinder: Dreher, Hermann, Dr., Im Waldwinkel 5,
D-6104 Seeheim-Jugenheim 1(DE)

ACTORUM AG

## Beschreibung

Die Erfindung betrifft ein Verfahren zur Rückgewinnung und Wiederverwendung von organischen Rückständen aus dem Abwasser der Polyphenylenethersynthese, welche in einem ersten Schritt die oxidative Kupplung von Phenolen mit Sauerstoff in Gegenwart eines Kupfer-Amin-Katalysators in organischen Lösungsmitteln und in einem zweiten Schritt eine Abtrennung des Katalysators mit Hilfe wäßriger Lösungen von Komplexierungsmitteln und/oder Kationenaustauscherharzen umfaßt.

Es ist bereits bekannt, die Polymerisationsreaktion bei der Herstellung von Polyphenylenethern in organischen Lösungsmitteln dadurch zu unterbrechen, daß der Katalysator aus dem Reaktionsmedium entfernt wird. Dies geschieht durch Gegenstromextraktionsverfahren unter Verwendung von wäßrigen Lösungen von organischen oder anorganischen Säuren (vgl. US-A 3 630 995). Es werden auch Polycarbonsäuren oder Polyaminocarbonsäuren (vgl. US-A 3 838 102) oder andere Chelatisierungsmittel wie Nitrilotriessigsäure und ihre Natriumsalze oder Ethylendiamintetraessigsäure (EDTA) und ihre Natriumsalze (Na-EDTA) (vgl. US-A 3 951 917, 4 157 434 und EP-A 1 131 243) eingesetzt, letztere auch in Kombination mit Ammoniumsalzen (vgl. US-A 4 062 970). Beschrieben ist auch die Katalysatorabtrennung mit Hilfe komplexbildender Mittel aus der Gruppe des Bisguanidins (vgl. US-A 4 097 458). In den Literaturstellen US-A 4 237 265 und EP-A 1 131 243 ist auch bereits ein kontinuierliches Verfahren zur Katalysatorabtrennung beschrieben.

Unbefriedigend bei allen bisher bekannten Verfahren ist der Umstand, daß stets verdünnte kupferhaltige Lösungen anfallen, deren Aufarbeitung zunehmend Probleme macht.

Aus US-A 4 071 500 war ein Verfahren zur Polyphenylenethersynthese und mehrstufiger Abwasserreinigung bekannt.

Nachteilig ist jedoch die Fällung des Kupfers mit Zucker als Oxid. Das Kupferoxid wird als Katalysatorbasis in die Polyphenylenethersynthese zurückgeführt, so daß man bei der Produktion von Polyphenylenether in umständlicher Weise mit Katalysatoren auf Basis von Kupfer einerseits und Basis von Kupferoxid andererseits arbeiten muß.

Für den Fachmann, der eine Alternative zu der ungünstigen Fällung des Kupfers mit Zucker als Oxid sucht, war es nicht vorhersehbar, daß die Fällung des Kupfers aus dem Abwasser des Katalysatorreinigungsschrittes als Sulfid zu einem problemlos handhabbaren Niederschlag führt.

Weiterhin ist es bei dem Verfahren der US-A 4 071 500 von Nachteil, daß das Amin in Form einer verunreinigten toluolischen Lösung anfällt, was weitere aufwendige Verfahrensschritte zur Aufarbeitung dieser Lösungen erfordert.

Der Erfindung liegt deshalb die Aufgabe zugrunde, ein einfaches und hochwirksames Verfahren zur Abtrennung und Rückgewinnung der Katalysatorreste aus dem Abwasser der Katalysatorabtrennung aufzufinden, bei dem sowohl das Metall als auch das Komplexierungsmittel vollständig abgetrennt und zurückgewonnen wird.

Diese Aufgabe wird erfindungsgemäß durch ein Verfahren gemäß der Patentansprüche 1 bis 6 gelöst.

Als Metallkomponente des Katalysators kommt dabei Kupfer in Frage, bei den Aminen handelt es sich üblicherweise um Di-n-butylamin, Diethylamin, Picolin, Chinolin, Pyridinbasen, Triisopropylamin, Dimethylisopropanolamin, Triethanolamin, Triisopropanolamin, Diisopropanolamin und andere.

Bei dem für die bekannte Polykondensation verwendeten Katalysatorkomplex handelt es sich üblicherweise um eine Kombination obiger Amine mit einem Kupfersalz wie Kupfer-I-bromid, Kupfer-I-chlorid, Kupfer-II-acetessig-ester oder Kupfer-IIacetylacetonat. Ein bevorzugter Bereich bei der Menge der eingesetzten Amine liegt bei 2,0 bis 25 Mol pro 100 Mol des Monomeren, die Konzentration der Amine kann aber in der Reaktionsmischung innerhalb weiter Grenzen variieren. Die Konzentration der Kupfersalze wird gering gehalten und variiert von 0,2 bis 2,5 Mol pro 100 Mol des Monomeren.

Die Herstellung hochmolekularer Polyphenylenether aus einwertigen Phenolen durch oxidative Kupplungsreaktion mit Sauerstoff bei Temperaturen zwischen 15 und 50°C in Anwesenheit eines Katalysatorkomplexes aus einem Kupfersalz und einem organische Amin in Gegenwart eines organischen Lösungsmittels ist so bekannt, daß sie hier nicht weiter beschrieben werden muß (vgl. z.B. die US-Patente 3 306 874, 3 306 875, 3 661 848, 3 378 505, 3 639 656 oder 3 642 699). Als organische Lösungsmittel werden Benzol, Toluol, Ethylbenzol und aliphatische $C_9$- bis $C_{10}$-Kohlenwasserstoffe, insbesondere Toluol, verwendet. Der Anteil des Lösungsmittels liegt üblicherweise im Bereich von 1:1 bis 10:1 Gewichtsteilen, d.h. maximal bis zu einem Überschuß des 20-fachen an Lösungsmittel, bezogen auf das monomere Phenol. Als Monomere kommen solche einwertigen Phenole in Betracht, die in den beiden ortho-Stellungen und gegebenenfalls in meta-Position, nicht aber in para-Stellung Alkylsubstituenten aufweisen. Beispiele geeigneter Phenole sind 2,6-Dimethylphenol, 2,6-Diethylphenol, 2-Methyl-6-ethylphenol oder 2,3,6-Trimethylphenol.

Wenn die Polykondensation die gewünschte Ausbeute und das Polymere das gewünschte Molekulargewicht erreicht haben, enthält die Lösung 5 bis 30 Gewichtsprozent Polyphenylenether, 0,005 bis 1,5 Gewichtsprozent Metallionen, 0,1 bis 6,0 Gewichtsprozent Amin sowie gegebenenfalls geringe Mengen anderer Materialien. Diese polyphenylenetherhaltigen Reaktionslösungen werden üblicherweise zur Abtrennung der Metallkomponente des Katalysators mit einer wäßrigen Lösung eines Chelatisierungsmittels, z.B. bestehend aus Ethylendiamintetraessigsäure, abgekürzt EDTA, oder einer wäßrigen Lösung eines Salzes dieser Säure behandelt und es wird die wäßrige Phase als Abwasser abgetrennt (vgl. US-Patente 3 951 917, 4 157 484, 4 026 870, 4 463 164 und 4 071 500).

Durch das Chelatisierungsmittel wird das Überführen unter Chelatkomplexbildung der in dem organischen Medium gelösten Metallkomponente des Katalysators in einen wasserlöslichen Komplex bewirkt. Bezüglich der Wirkungsweise und der chemischen Zusammensetzung der gebildeten wasserlöslichen Katalysatormetallverbindungen wird auf einschlägige Literaturstellen wie "Organic Reagens for Metals" Verlag Hoplein & Williams Ltd., London, E.C.1, (1934) und "Chemie der Komplexverbindungen – Spezieller Teil", F. Hein und B. Heyn, Verlag S. Hirzel, Leipzig (1978) verwiesen.

Nach erfindungsgemäßen Verfahren zur Rückgewinnung und Wiederverwendung von organischen Rückständen aus dem Abwasser der Polyphenylenethersynthese, welche in einem ersten Schritt die oxidative Kupplung von Phenolen mit Sauerstoff in Gegenwart eines Kupfer-Amin-Katalysators in organischen Lösungsmitteln und in einem zweiten Schritt eine Abtrennung des Katalysators mit Hilfe wäßriger Lösungen von Komplexierungsmitteln und/oder Kationenaustauschharzen umfaßt, wird das Abwasser aus dem Katalysatorabtrennschritt

a) in einer ersten Stufe alkalisch eingestellt, so daß sich mehr als 80 Gew.-% des als Ammoniumsalz gelösten Amins abscheiden,

b) in einer zweiten Stufe die in der verbleibenden wäßrigen Lösung enthaltenden Kupferionen zu mehr als 95 Gew.-% abgetrennt dadurch, daß sie durch Zusatz von Sulfidionen bei pH-Werten von 4 bis 14 als Kupfersulfid gefällt oder elektrochemisch als Kupfermetall kathodisch an geeigneten Elektrodenoberflächen abgeschieden werden,

c) anschließend werden die für die Kupferabtrennung aus den Polyphenyletherlösungen eingesetzten Komplexierungsmittel durch Ansäuern mit einer Mineralsäure auf einen pH-Wert von kleiner als 2,5 aus dem Abwasser zu mehr als 80 Gew.-% ausgefällt und zurückgewonnen,

und die Wertprodukte aus den Reinigungsstufen a) und c) werden in den Syntheseprozeß zurückgeführt.

Bevorzugt wird im Reinigungsschritt a) das Abwasser mit Natronlauge auf pH-Werte größer als 11 eingestellt. Als Komplexierungsmittel wird bevorzugt eine wäßrige Lösung des Dinatrium- oder Aminsalzes der Ethylendiamintetraessigsäure (EDTA) eingesetzt. Bevorzugt wird nach der Kupferabtrennung die das Komplexierungsmittel enthaltende Lösung direkt in den Katalysatorabtrennprozeß zurückgeführt.

Der Zusatz der Base für die Aminabtrennung erfolgt in einem üblichen Mischaggregat, wie Rührbehälter oder Pumpen, in welchem die beiden Lösungen innig vermischt werden. Die Aminabtrennung erfolgt in einem üblichen Abscheider, wie Schwerkraftabscheider, Absetzbehälter oder Zentrifuge, in welchen die beiden Phasen getrennt werden. Als starke Base wird bevorzugt Natronlauge, als Säure bevorzugt Schwefelsäure oder insbesondere schweflige Säure und als Sulfidionen Natriumhydrogensulfid eingesetzt. Zur Abtrennung des gefällten Kupfersulfids und der EDTA werden Siebbandpressen, Kammerfilterpressen und ganz besonders Vakuumfilter eingesetzt.

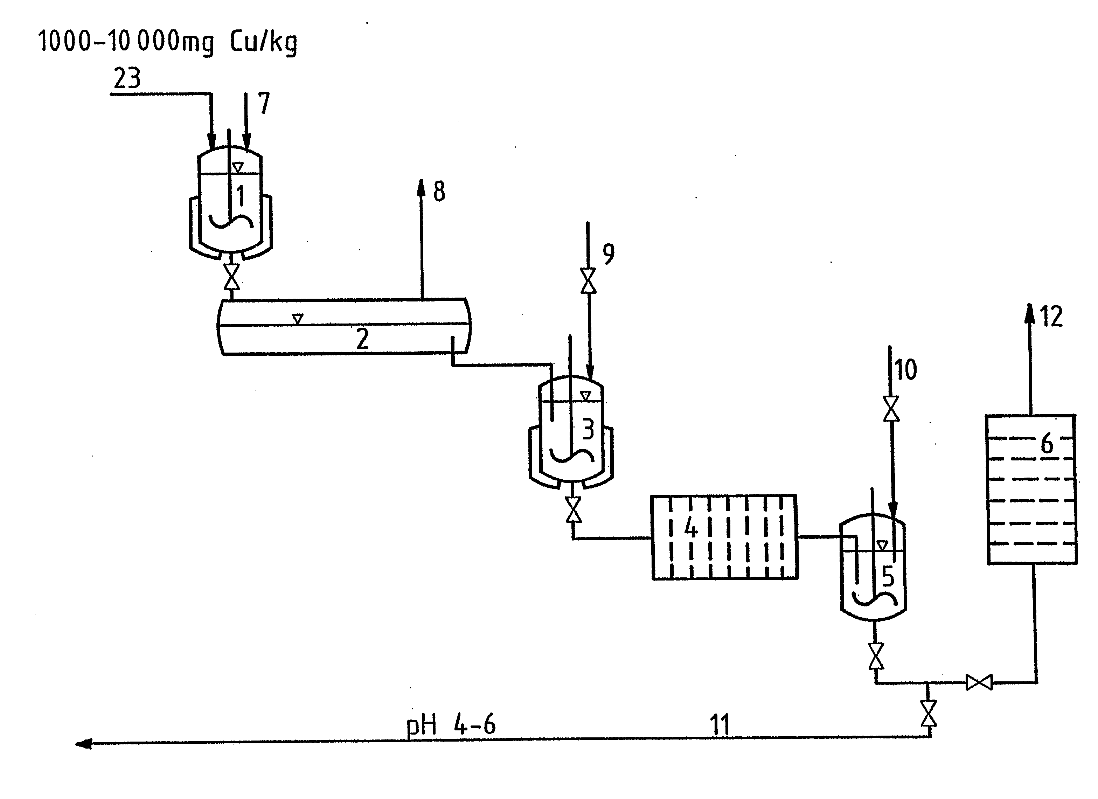

Die Zeichnung zeigt ein Verfahrensfließbild für das erfindungsgemäße Verfahren zur Rückgewinnung des Kupfers, Amins und der eingesetzten Wertstoffe, bestehend aus einer Mischaggregat-Abscheider-Stufe für die Aminrückgewinnung und zwei Mischaggregat-Filtrationsstufen für die Rückgewinnung des Kupfers und der EDTA.

Dem Mischaggregat 1 fließt kontinuierlich kupfer- und aminhaltige wäßrige Lösung aus dem Katalysatorabtrennschritt der PPE-Polymerisation zu.

In der ersten Stufe im Mischaggregat 1 wird die wäßrige kupfer- und aminhaltige Lösung 23 mittels NaOH 7 auf pH 11,5 gestellt. Das abgeschiedene Amin 8 wird im Abscheider 2 abgetrennt. Die wäßrige Lösung wird im Mischkessel 3 mit NaHS-Lösung 9 versetzt, worauf das Kupfer als CuS ausgefällt wird und mittels einer Siebbandpresse 4 abfiltriert wird. Das Filtrat, in dem das Komplexierungsmittel gelöst vorliegt, wird im Mischkessel 5 durch Einleiten von SO$_2$ 10 auf pH < 2 gestellt, worauf die EDTA quantitativ ausgefällt wird und mittels einer weiteren Siebbandpresse abfiltriert wird. Das Filtrat kann auch mit dem SO$_2$ auf pH 4 bis 6 gestellt werden und in den Katalysatorabtrennprozeß 11 zurückgeführt werden. Das Amin und die EDTA werden nach Aufarbeitung in den Polymerisationskreislauf zurückgeführt.

**Patentansprüche**

1. Verfahren zur Rückgewinnung und Wiederverwendung von organischen Rückständen aus dem Abwasser der Polyphenylenethersynthese, welche in einem ersten Schritt die oxidative Kupplung von Phenolen mit Sauerstoff in Gegenwart eines Kupfer-Amin-Katalysators in organischen Lösungsmitteln und in einem zweiten Schritt eine Abtrennung des Katalysators mit Hilfe wäßriger Lösungen von Komplexierungsmitteln und/oder Kationenaustauschharzen umfaßt, wobei das Abwasser aus dem Katalysatorabtrennschritt

a) in einer ersten Stufe alkalisch eingestellt wird, so daß sich mehr als 80 Gew.-% des als Ammoniumsalz gelösten Amins abscheiden,

b) in einer zweiten Stufe die in der verbleibenden wäßrigen Lösung enthaltenden Kupferionen zu mehr als 95 Gew.-% abgetrennt werden dadurch, daß sie durch Zusatz von Sulfidionen bei pH-Werten von 4 bis 14 als Kupfersulfid gefällt oder elektrochemisch als Kupfermetall kathodisch an geeigneten Elektrodenoberflächen abgeschieden werden, c) anschließend die für die Kupferabtrennung aus den Polyphenyletherlösungen eingesetzten Komplexierungsmittel durch Ansäuern mit einer Mineralsäure auf einen pH-Wert von kleiner als 2,5 aus dem Abwasser zu mehr als 80 Gew.-% ausgefällt und zurückgewonnen werden, und wobei die Wertprodukte aus den Reinigungsstufen a) und c) in den Syntheseprozeß zurückgeführt werden.

2. Verfahren nach Anspruch 1, dadurch gekennzeichnet, daß in der Reinigungsstufe (a) das Abwasser mit Natronlauge auf pH-Wert größer als 11 eingestellt wird.

3. Verfahren nach mindestens einem der Ansprüche 1 und 2, dadurch gekennzeichnet, daß in der Reinigungsstufe (b) die Kupferionen durch Zusatz von Sulfidionen bei pH-Werten von 4 bis 14 als Kupfersulfid gefällt werden.

4. Verfahren nach mindestens einem der Ansprüche 1 und 2, dadurch gekennzeichnet, daß die Kupferionen elektrochemisch als Kupfermetall kathodisch an geeigneten Elektrodenoberflächen abgeschieden werden.

5. Verfahren nach mindestens einem der Ansprüche 1 bis 4, dadurch gekennzeichnet, daß als Komplexierungsmittel eine wäßrige Lösung des Dinatrium- oder Aminsalzes der Ethylendiamintetraessigsäure eingesetzt wird, die nach der Kupferabtrennung durch Ansäuern mit einer Mineralsäure auf einen pH-Wert von kleiner als 2,5 als freie Säure ausgefällt wird.

6. Verfahren nach mindestens einem der Ansprüche 1 bis 5, dadurch gekennzeichnet, daß nach der Kupferabtrennung die das Komplexierungsmittel enthaltende Lösung direkt in den Katalysatorabtrennprozeß zurückgeführt wird.

## Claims

1. A process for recovering and reusing organic residues from the waste water of a polyphenylene ether synthesis which comprises in a first step the oxidative coupling of phenols with oxygen in the presence of a copper-amine catalyst in an organic solvent and in a second step the removal of the catalyst by means of an aqueous solution of a complexing agent or a cation exchange resin, wherein the waste water from the catalyst removal step
a) is rendered alkaline in a first stage, so that more than 80% by weight of the amine dissolved as an ammonium salt precipitate,
b) in a second stage the copper ions present in the remaining aqueous solution are removed to an extent of more than 95% by weight by precipitation as copper sulfate by addition of sulfide ions at a pH of from 4 to 14 or electrochemically as copper metal by cathodic deposition on a suitable electrode surface,
c) consequently the complexing agent used for removing the copper from the polyphenylene ether solution is precipitated from the waste water to an extent of more than 80% by weight by acidification with a mineral acid to a pH of less than 2.5, and recovered,
and wherein the useful products from purification stages a) and c) are recycled into the synthesis process.

2. A process as claimed in claim 1, wherein in purification stage (a) the waste water is adjusted with sodium hydroxide solution to pH of greater than 11.

3. A process as claimed in either or both of claims 1 and 2, wherein in purification stage (b) the copper ions are precipitated as copper sulfide by addition of sulfide ions at a pH of 4 to 14.

4. A process as claimed in either or both of claims 1 and 2, wherein the copper ions are electrochemically removed as copper metal by cathodic deposition on a suitable electrode surface.

5. A process as claimed in one or more of claims 1 to 4, wherein the complexing agent used is an aqueous solution of the disodium or amine salt of ethylenediaminetetraacetic acid which, after the copper has been removed, is precipitated as the free acid by acidification with a mineral acid to a pH of less than 2.5.

6. A process as claimed in one or more of claims 1 to 5, wherein, after the copper has been removed, the solution containing the complexing agent is recycled directly into the catalyst removal process.

## Revendications

1. Procédé pour la récuperation et la réutilisation de résidus oraniques contenus dans les eaux résiduaires de la synthèse de poly(éthers de phénylène), qui comprend comme premier stade une copulation oxydante de phénols, dans un solvant organique et en présence d'un catalyseur aminocuivrique, avec de l'oxygène, et comme deuxième stade la séparation du catalyseur à l'aide de solutions aqueuses d'agents complexants et (ou) de résines échangeuses de cations, dans lequel les eaux résiduaires provenant du stade de séparation du catalyseur
a) dans une première phase sont amenées à un pH alcalin, auquel plus de 80% en poids de l'amine dissoute comme sel d'ammonium se séparent;
b) dans une deuxième phase, les ions cuivre contenus dans la solution aqueuse restante sont éliminés à raison de plus de 95% en poids, soit par addition d'ions sulfure et précipitation à des pH de 4 à 14 comme sulfure de cuivre, soit par voie électrochimique sur une surface cathodique appropriée comme cuivre métallique,
c) l'agent complexant utilisé pour la séparation du cuivre des solutions de poly(éthers de phénylène) étant pour finir précipité et récupéré des eaux résiduaires, à raison de plus de 80% en poids, par acidification, à l'aide d'un acide minéral, à un pH inférieur à 2,5,
les substances de valeur récupérées dans les stades d'extraction a) et c) étant recyclées dans le procédé de synthèse.

2. Procédé suivant la revendication 1, caractérisé en ce que, dans le stade de purification (a), le pH des eaux résiduaires est amené à l'aide de soude caustique à une valeur supérieure à 11.

3. Procédé suivant l'une des revendications 1 et 2, caractérisé en ce que, dans le stade d'extraction (b), les ions cuivre sont précipités comme sulfure de cuivre par addition d'ions sulfure à un pH de 4 à 14.

4. Procédé suivant l'une des revendications 1 et 2, caractérisé en ce que les ions cuivre sont séparés comme cuivre métallique par avoie électrochimique sur des surfaces cathiodiques adéquates.

5. Procédé suivant l'une des revendications 1 à 4, caractérisé en ce que l'on emploie comme agent complexant une solution aqueuse du sel disodique ou du sel d'amine de l'acide éthylène-diamine-tétracétique qui, après la séparation du cuivre, est séparée comme acide libre par acidification avec un acide minéral à un pH inférieur à 2,5.

6. Procédé suivant l'une des revendications 1 à 5, caractérisé en ce que, après l'extraction du cuivre, la solution contenant l'agent complexant est recyclée telle quelle dans le procédé de séparation du catalyseur.

1000–10 000mg Cu/kg

pH 4–6